# EUROPÄISCHE PATENTSCHRIFT

(11) **EP 1 004 125 B1**
(45) Veröffentlichungstag und Bekanntmachung des Hinweises auf die Patenterteilung: **30.07.2003**
(21) Anmeldenummer: 99924893.3
(22) Anmeldetag: 06.05.1999
(51) Int. Cl.: H01F 7/08, H01F 7/16, F16K 29/00, F16K 31/06

(54) **ANTIKLEBESCHEIBE FÜR EINE ELEKTROMAGNETISCHE BETÄTIGUNGSEINRICHTUNG**
ANTI-STICKING DISC FOR AN ELECTROMAGNETIC ACTUATING DEVICE
DISQUE ANTICOLLAGE POUR DISPOSITIF D'ACTIONNEMENT ELECTROMAGNETIQUE

(30) Priorität: 28.05.1998 DE 19823968
(43) Veröffentlichungstag der Anmeldung: 31.05.2000
(73) Patentinhaber: Hydraulik-Ring GmbH, 72622 Nürtingen (DE)
(72) Erfinder: RÜPPEL, Robert, D-97836 Bischbrunn (DE); ZAPF, Friedrich, D-97753 Karlstadt (DE)
(74) Vertreter: Kohl, Karl-Heinz
(86) Internationale Anmeldenummer: EP9903114
(87) Internationale Veröffentlichungsnummer: WO99062084

(56) Entgegenhaltungen:
- EP-A- 0 576 813
- DE-A- 3 700 540
- DE-A- 19 504 185
- GB-A- 1 070 068

## Beschreibung

Antiklebescheibe für eine elektromagnetische Betätigungseinrichtung

Die Erfindung betrifft eine Antiklebescheibe insbesondere für einen Anker einer elektromagnetische Betätigungseinrichtung. Die Antiklebescheibe hat eine zum Kontakt mit dem Anker bestimmte Anker-Aufstandsfläche sowie eine zum Kontakt mit einem durch den Anker zu betätigenden Bauteil bestimmte Ventilkörper-Aufstandsfläche. Die Erfindung betrifft weiterhin eine elektromagnetische Betätigungseinrichtung mit einer Antiklebescheibe sowie ein Verfahren zum Herstellen einer Antiklebescheibe.

Die bekannten Antiklebescheiben werden in einem Bereich zwischen einem Anker und einem von dem Anker betätigten Bauteil vorgesehen. Antiklebescheiben können als Drehteil ausgebildet sein, die beispielsweise auf dem Anker befestigbar sind.

Der Erfindung liegt die Aufgabe zugrunde, eine Antiklebescheibe bereitzustellen, die sich einfach und kostengünstig herstellen läßt.

Diese Aufgabe wird durch den Gegenstand der unabhängigen Ansprüche gelöst. Vorteilhafte Ausgestaltungen ergeben sich aus den jeweiligen Unteransprüchen.

Gemäß einem Grundgedanken der Erfindung ist im Bereich der Anker-Aufstandsfläche und/oder im Bereich der Ventilkörper-Aufstandsfläche ein im wesentlichen stabförmiger Halteabschnitt vorgesehen. Ein solcher stabförmiger Halteabschnitt findet in einer im Anker bzw. in einem durch den Anker zu betätigenden Bauteil vorgesehenen Durchgangsbohrung Platz und sorgt für einen sicheren Halt der Antiklebescheibe. Darüber hinaus ist aufgrund dieser Ausgestaltung der erfindungsgemäßen Antiklebescheibe eine einfache Ausbildung möglich, beispielsweise als einfach herzustellendes Stanz-/Biegebauteil, das kostengünstig aus Blech herstellbar ist.

In einer Weiterbildung der Erfindung erstreckt sich der Halteabschnitt im wesentlichen senkrecht zu der Anker-Aufstandsfläche bzw. zu der Ventilkörper-Aufstandsfläche. Bei einer solchen Ausbildung der erfindungsgemäßen Antiklebescheibe ist ein guter und zuverlässiger Kontakt zwischen der Anker-Aufstandsfläche bzw. der Ventilkörper-Aufstandsfläche und dem Anker bzw. dem zu betätigenden Bauteil gewährleistet, weil dann der Halteabschnitt stets senkrecht zu einer Durchtrittsbohrung des Ankers bzw. des zu betätigenden Bauteils gehalten wird.

Außerdem ist vorgesehen, daß der Halteabschnitt in wenigstens einer Richtung quer zu seiner Haupterstreckungsrichtung eine zunehmende Breite aufweist. Dadurch läßt sich eine besonders genaue Führung des Halteabschnitts in einer im Anker bzw. in einem zu betätigenden Bauteil vorgesehenen Bohrung erreichen. Dabei kann der Halteabschnitt an seinem von der Anker-Aufstandsfläche bzw. von der Ventilkörper-Aufstandsfläche abgewandten Ende auch eine Verdickung aufweisen.

Wenn die Antiklebescheibe eine Durchgangsöffnung aufweist, die Anker-Aufstandsfläche und Ventilkörper-Aufstandsfläche miteinander verbindet, dann ist gewährleistet, daß Fluid im Bereich der Antiklebescheibe zirkulieren kann. Solche Fluidströmungen sind dann notwendig, wenn im Bereich des Ankers und/oder des zu betätigenden Bauteils Fluid vorgesehen ist, wie dies beispielsweise bei Hydraulikventilen der Fall ist. Bei einer Ankerbewegung ist bei solchen Hydraulikventilen ein Volumenausgleich notwendig, der über die Durchgangsöffnung erfolgt. Dabei können Durchgangsöffnungen auch als im Bereich der Antiklebescheibe vorgesehene Kanäle ermöglicht werden.

Wenn die Anker-Aufstandsfläche und die Ventilkörper-Aufstandsfläche eine unterschiedliche Größe aufweisen, kann auf einfache Weise gewährleistet werden, daß durch den Anker Bauteile betätigt werden können, deren Größe sich von der Größe des Ankers unterscheidet.

Die erfindungsgemäße Antiklebescheibe läßt sich besonders einfach beispielsweise als Blechbiegebauteil herstellen, wenn Halteabschnitt, Anker-Aufstandsfläche und/oder Ventilkörper-Aufstandsfläche einstückig ausgebildet sind. In diesem Fall läßt sich die erfindungsgemäße Antiklebescheibe beispielsweise mit einem Stanz-/Biegeverfahren einfach und kostengünstig herstellen.

Ein erfindungsgemäßes Verfahren zur Herstellung einer Antiklebescheibe umfaßt die folgenden Schritte:
- Vorsehen eines Blechabschnitts,
- Ausstanzen eines Grundkörpers aus dem Blechabschnitt, wobei am Grundkörper wenigstens ein Halteabschnittsbereich sowie wenigstens ein Aufstandsflächenbereich ausgebildet werden,
- Umbiegen des Halteabschnittsbereichs, so daß er vom Auf standsflächenbereich absteht.

In der einfachsten Ausbildung wird mit dem erfindungsgemäßen Verfahren ein Aufstandsflächenbereich hergestellt, der die Form einer Scheibe hat. Der Halteabschnittsbereich erstreckt sich hierbei zunächst von einem Bereich im Zentrum des Aufstandsflächenbereichs radial nach außen. Nach einem Umbiegen des Halteabschnittsbereichs steht dieser im Zentrum des Aufstandsflächenbereichs senkrecht auf einer Seite des Grundkörpers ab.

Es können auch zwei Halteabschnittsbereiche vorgesehen werden, wobei diese auch so umgebogen werden können, daß sie nach dem Umbiegen aufeinander zu liegen kommen. Bei der Verwendung eines Blechs mit einer geringen Blechstärke, das sich sehr einfach verarbeiten läßt, ergibt sich so der Vorteil, daß ein Halteabschnittsbereich hergestellt werden kann, der besonders stabil ist, da der Halteabschnittsbereich die doppelte Blechstärke aufweist.

Derselbe Vorteil ergibt sich dann, wenn der Aufstandsflächenbereich so hergestellt wird, daß wenigstens eine Anker-Aufstandsfläche durch eine Biegekante von wenigstens einer Ventilkörper-Aufstandsfläche getrennt ist. Dadurch läßt sich auch mit einem dünnen Blech, das sich leicht biegen läßt, eine gewünschte Dicke beispielsweise in doppelter Blechstärke der Antiklebescheibe erreichen.

Das erfindungsgemäße Verfahren sieht auch die Ausbildung wenigstens einer Durchgangsöffnung im Halteabschnittsbereich und/oder im Aufstandsflächenbereich vor, die Strömungen von Fluid im Bereich der Antiklebescheibe erlaubt.

Das Umbiegen des Halteabschnittsbereichs kann dabei so vorgenommen werden, daß er im wesentlichen senkrecht vom Aufstandsflächenbereich absteht. Dadurch ergibt sich eine gute Führung der mit dem erfindungsgemäßen Verfahren hergestellten Antiklebescheibe.

Die Erfindung ist in der Zeichnung anhand mehrerer Ausführungsbeispiele veranschaulicht.
- Figur 1: zeigt einen Querschnitt durch eine erfindungsgemäße elektromagnetische Betätigungseinrichtung,
- Figur 2: zeigt eine erfindungsgemäße Antiklebescheibe der elektromagnetischen Betätigungseinrichtung aus Figur 1 in der Ansicht von unten,
- Figur 3: zeigt eine Seitenansicht der Antiklebescheibe aus Figur 2,
- Figur 4: zeigt eine weitere Seitenansicht der Antiklebescheibe aus den Figuren 2 und 3,
- Figur 5: zeigt die Antiklebescheibe aus den Figuren 2 bis 4 in der Ansicht von oben,
- Figur 6: zeigt einen Querschnitt durch einen Anker einer weiteren erfindungsgemäßen elektromagnetischen Betätigungseinrichtung mit einer weiteren erfindungsgemäßen Antiklebescheibe,
- Figur 7: zeigt eine Ansicht der Antiklebescheibe aus Figur 6 von unten,
- Figur 8: zeigt einen Querschnitt durch die Antiklebescheibe aus den Figuren 6 und 7,
- Figur 9: zeigt eine Seitenansicht der Antiklebescheibe aus den Figuren 6 bis 8,
- Figur 10: zeigt eine Draufsicht auf eine weitere erfindungsgemäße Antiklebescheibe,
- Figur 11: zeigt einen Querschnitt durch die Antiklebescheibe aus Figur 10,
- Figur 12: zeigt eine Seitenansicht der Antiklebescheibe aus den Figuren 10 und 11.

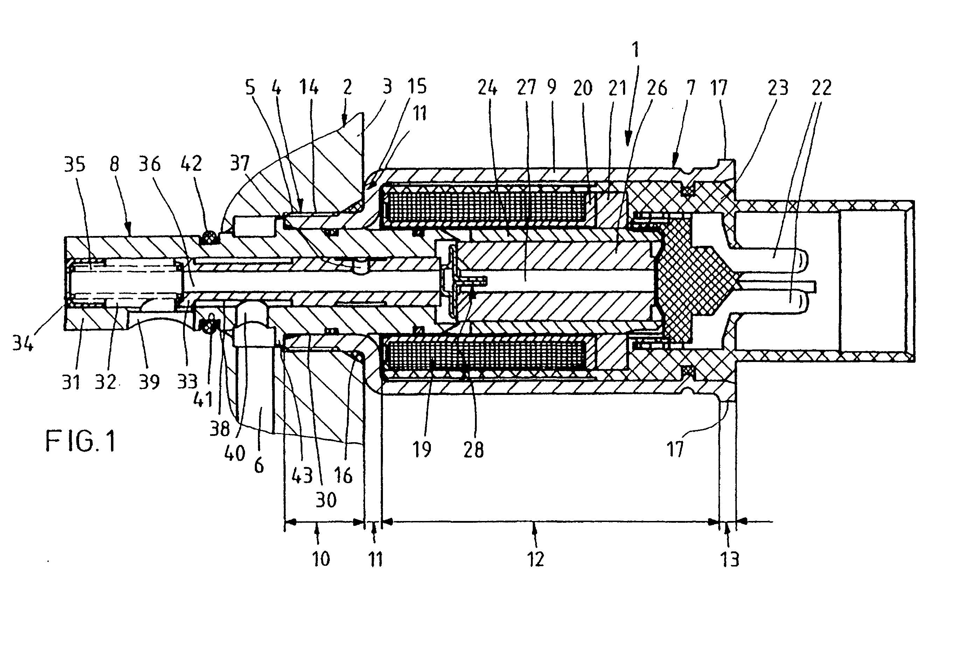

Figur 1 zeigt ein Magnetventil 1 im Längsquerschnitt. Das Magnetventil 1 ist in eine nur teilweise dargestellte hydraulische Baugruppe 2 eingeschraubt, von der lediglich ein Baugruppengehäuse 3 mit einer Magnetventilaufnahmebohrung 4, mit einem Innengewinde 5 sowie mit einem hydraulischen Kanal 6 zu sehen sind.

Das Magnetventil 1 gliedert sich im wesentlichen in eine Betätigungseinrichtung 7 sowie in ein Ventil 8, das in die Betätigungseinrichtung 7 eingesetzt ist und durch diese betätigt wird.

Die Betätigungseinrichtung 7 weist ein Gehäuse 9 auf, das als Tiefziehteil aus einem Blechabschnitt hergestellt wurde. Das Gehäuse 9 gliedert sich in einen Befestigungsabschnitt 10, in einen Absatzabschnitt 11, in einen Spulenaufnahmeabschnitt 12 sowie in einen Betätigungsabschnitt 13. Der Befestigungsabschnitt 10, der Absatzabschnitt 11, der Spulenaufnahmeabschnitt 12 sowie der Betätigungsabschnitt 13 haben bezüglich der Längsachse des Gehäuses 9 jeweils im wesentlichen zylindrische Querschnitte.

Am Befestigungsabschnitt 10 ist ein Außengewinde 14 vorgesehen, das hinsichtlich seiner Hauptabmessungen mit dem Innengewinde 5 übereinstimmt.

Die dem Baugruppengehäuse 3 zuwandte Seite des Absatzabschnitts 11 hat eine bearbeitete Anlauffläche 15, die am Baugruppengehäuse 3 anliegt, wenn das Gehäuse 9 in die Magnetventilaufnahmebohrung 4 eingeschraubt ist. Im Bereich zwischen Anlauffläche 15 und Außengewinde 14 ist ein Dichtring 16 eingelegt, der eine Abdichtung zwischen den Baugruppengehäuse 3 und dem Gehäuse 9 sicherstellt.

Der Spulenaufnahmeabschnitt 12 des Gehäuses 9 hat wie der Befestigungsabschnitt 10 eine im wesentlichen zylindrische Form. Der Spulenaufnahmeabschnitt 12 weist jedoch gegenüber dem Befestigungsabschnitt 10 einen größeren Durchmesser auf. Der Spulenaufnahmeabschnitt 12 mündet auf einer Anschlußseite des Magnetventils 1 in den Betätigungsabschnitt 13, der als Sechskant mit Betätigungsflächen 17 ausgebildet ist.

Das Gehäuse 9 ist als Tiefziehteil ausgebildet, wobei in nachfolgenden Bearbeitungsschritten das Außengewinde 14 auf dem Befestigungsabschnitt 10 aufgeschnitten und die Anlauffläche 15 nachbearbeitet sein kann. Anschließend werden die Betätigungsflächen 17 ausgestanzt.

An der Anschlußseite des Magnetventils 1 ist eine Spuleneinschuböffnung 18 im Gehäuse 9 vorgesehen. In die Spuleneinschuböffnung 18 sind weitere Bestandteile der Betätigungseinrichtung 7 eingesetzt, wie man am besten in Figur 1 erkennen kann. Hierzu zählen eine Spulenwicklung 19, die auf einem Spulenträger 20 vorgesehen ist, eine Polscheibe 21 sowie Anschlußkontakte 22, wobei Spulenwicklung 19, Spulenträger 20, Polscheibe 21 und Anschlußkontakte 22 in eine Spulenumspritzung 23 eingebettet sind.

Im Inneren des Spulenträgers 20 ist ein Polschuh 24 angeordnet. Innerhalb des Polschuhs 24 ist ein zylindrischer Magnetanker 26 gelagert, der in der Längsachse des Magnetventils 1 verschieblich ist. Der Magnetanker 26 weist eine Ausgleichsbohrung 27 auf, die entlang seiner Längsachse verläuft. Eine erfindungsgemäße Antiklebescheibe 28 legt einen minimalen axialen Luftspalt des Magnetankers 26 fest.

Das Ventil 8 ist in eine Ventileinschuböffnung 30 im Befestigungsabschnitt 10 eingeführt, so daß es von der Außenseite des Gehäuses 9 bis in das Innere des Spulenaufnahmeabschnitts 12 ragt und dort durch den Magnetanker 26 betätigbar ist.

Das Ventil 8 gliedert sich in ein Ventilgehäuse 31, da es im wesentlichen einen zylindrischen Querschnitt aufweist und das mit einer Ventilbohrung 32 versehen ist, die in Längsrichtung des Ventils 8 verläuft sowie in einen Ventilkörper 33, der verschieblich in der Ventilbohrung 32 angeordnet ist. Zwischen einem Anlaufende 34 und dem Ventilkörper 33 erstreckt sich eine Rückstellfeder 35, die als Spiralfeder ausgebildet ist. In der in Figur 1 gezeigten Darstellung ist der Ventilkörper 33 aufgrund der Rückstellfeder 35 so weit in das Innere des Gehäuses 9 eingedrückt, daß der Ventilkörper 33 an der Antiklebescheibe 28 anliegt.

Der Ventilkörper 33 ist mit einer Ventilkörperausgleichsbohrung 36 versehen, die in der Längsrichtung des Ventils 8 verläuft. Von der Ventilkörperausgleichbohrung 36 aus zweigt eine Querbohrung 37 zu der Wandung der Ventilbohrung 32 ab. Der Ventilkörper selbst weist auf seiner Außenseite einen zylindrischen Überstömkanal 38 auf, der sich um den Umfang des Ventilkörpers 33 herum erstreckt.

Im Ventilgehäuse 31 sind im Bereich des Überstömkanals 38 des Ventilkörpers 33 eine Primärbohrung 39 sowie eine Sekundärbohrung 40 vorgesehen, die in entsprechende Kanäle im Baugruppengehäuse 3 münden. In dem in Figur 1 gezeigten Ausführungsbeispiel mündet die Sekundärbohrung 40 in den Kanal 6. Zur Abdichtung der Primärbohrung 39 und der Sekundärbohrung 40 gegeneinander ist in einer Dichtnut 41 am Ventilgehäuse 31 ein Dichtring 42 vorgesehen.

Schließlich weist das Ventilgehäuse 31 noch an seinem äußern Umfang einen kreisscheibenförmigen Anlaufabsatz 43 auf. Der Anlaufabsatz ist so gestaltet, daß eine Vorderseite des Befestigungsabschnitts 10 eine Seite des Anlaufabsatzes 43 beaufschlagt.

Das Magnetventil 1 funktioniert im Betrieb wie folgt. In der in Figur 1 gezeigten Schließstellung des Magnetventils 1 befindet sich der Ventilkörper 33 in einer Lage, in der Primärbohrung 39 und Sekundärbohrung 40 gegen Durchflüsse von Fluid abgesperrt sind. Bei einer Erregung der Spulenwicklung 19, nachdem eine Betriebsspannung an die Anschlußkontakte 22 angelegt wurde, bewegt sich der Magnetanker 26 im Gehäuse 9 in Richtung des Absatzabschnitts 11 und drückt dabei den Ventilkörper 33 gegen die Rückstellkraft der Rückstellfeder 35 in das Ventilgehäuse 31 hinein. Durch die Gestaltung des Überströmkanals 38 ist dann eine Verbindung zwischen der Primärbohrung 39 und Sekundärbohrung 40 gewährleistet, so daß Fluid zwischen Primärbohrung 39 und Sekundärbohrung 40 strömen kann.

Nach dem Abschalten der Betriebsspannung an den Anschlußkontakten 22 wird der Magnetanker 26 aufgrund der Wirkung der Rückstellfeder 35 über, den Ventilkörper 33 wieder in seine in Figur 1 gezeigte Ausgangslage zurückgedrückt.

Zur Herstellung des Gehäuses 9 wird wie folgt verfahren. Aus einem in dieser Ansicht nicht gezeigten Blechabschnitt wird über ein umformendes Verfahren wie ein Tiefziehverfahren das Gehäuse 9 in seiner Grundform mit einem Befestigungsabschnitt 10, mit einem Absatzabschnitt 11 sowie mit einem Spulenaufnahmeabschnitt 12 hergestellt, wie es in Figur 1 gezeigt ist. Durch Ausstanzen von sich radial erstreckenden Betätigungsflächen entsteht ein Betätigungsabschnitt 13.

Durch nachfolgendes Bearbeiten der Anlauffläche 15 im Bedarfsfall - beispielsweise mit einem spanabhebenden Verfahren - wird diese geebnet. In einem abschließenden Schritt wird das Außengewinde 14 aufgeschnitten sowie die Ventileinschuböffnung 30 im Bedarfsfall auf das gewünschte Maß aufgebohrt und geglättet.

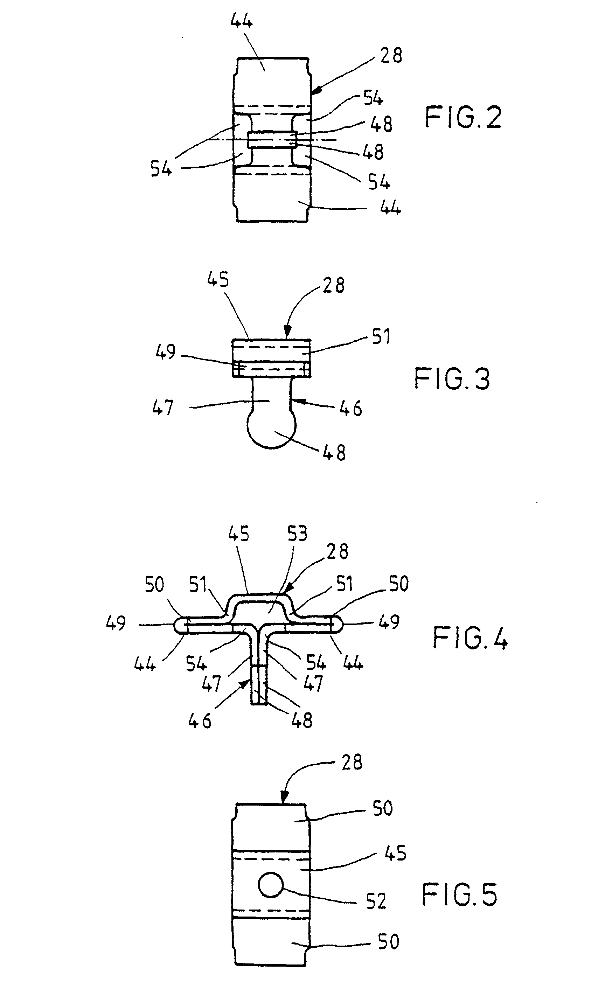

Die Figuren 2 bis 5 zeigen die Antiklebescheibe aus Figur 28 in unterschiedlichen Ansichten.

Wie man am besten in Figur 4 sieht, ist die Antiklebescheibe 28 als einstückiges Blechbiegebauteil hergestellt. Die Antiklebescheibe 28 gliedert sich in zwei Anker-Aufstandsflächen 44, die zum Kontakt mit dem Magnetanker 26 bestimmt sind, in eine Ventilkörper-Aufstandsfläche 45, die zum Kontakt mit dem Ventilkörper 33 bestimmt ist, sowie in einen Halteabschnitt 46, der in der Ausgleichsbohrung 27 geführt ist.

Der Halteabschnitt 46 weist zwei aneinander liegende Haltelaschen 47 auf, die an ihrem unteren Ende eine kreisscheibenförmige Verdickung 48 aufweisen, wie am besten in Figur 3 zu sehen ist. Zwischen den Haltelaschen 47 und der Anker-Aufstandsfläche 44 ist jeweils eine Biegekante vorgesehen, wie am besten in Figur 4 zu sehen ist. Die Haltelaschen 47 sind rechtwinklig von je einer Anker-Aufstandsfläche 44 weggebogen. An den Außenseiten der Anker-Aufstandsflächen 44 sind Umbiegekanten 49 ausgebildet, an die sich je ein Übergangsabschnitt 50 anschließt. Die Übergangsabschnitte 50 und die Anker-Aufstandsflächen 44 liegen aneinander an. Auf der Innenseite der Übergangsabschnitte 50 schließt sich je eine Tragwandung 51 an, wobei zwischen je einer Tragwandung 51 und dem benachbarten Übergangsabschnitt 50 eine Biegekante vorgesehen ist. Die Tragwandung 51 erstreckt sich im wesentlichen senkrecht vom Übergangsabschnitt 50 aus nach oben.

Wie man wiederum am besten in Figur 4 sieht, ist die Ventilkörper-Aufstandsfläche 45 mit den Tragwandungen 51 verbunden, und zwar über je eine Biegekante.

Zum Durchströmen der Antiklebescheibe 28 mit Fluid ist in der Ventilkörper-Aufstandsfläche 45 ein zylindrisches Loch 52 vorgesehen, das von der Außenseite der Ventilkörper-Aufstandsfläche 45 aus in einen Zwischenraum 53 mündet, der zwischen der Ventilkörper-Aufstandsfläche 45, den Tragwandungen 51 und den Anker-Aufstandsflächen 44 ausgebildet ist.

Wie man am besten in Figur 2 sieht, sind in einem Bereich zwischen je einer Haltelasche 47 und einer Anker-Aufstandsfläche 44 Aussparungen 54 ausgeformt. Die Aussparungen 54 sind dabei so ausgebildet, daß Fluid, das durch das Loch 52 in den Zwischenraum 53 eintritt, aus diesem durch die Aussparungen 54 wieder austreten kann. Auf diese Weise kann die Antiklebescheibe 28 von Fluid durchströmt werden.

Zur Herstellung der Antiklebescheibe 28 wird zunächst aus einem Blechabschnitt ein Grundkörper ausgestanzt, der die Form eines länglichen, flachen Streifens aufweist. Dabei sind am Grundkörper bereits die Aussparungen 54 sowie die Haltelaschen 47 mit den Verdickungen 48 ausgeformt. In einem weiteren Schritt wird das Loch 52 eingebracht.

Durch Umbiegen der einzelnen Bereiche dieses Grundkörpers werden der Halteabschnitt 46, die Anker-Aufstandsflächen 44 und die Ventilkörper-Aufstandsfläche 45 ausgebildet, wie es in den Figuren 2 bis 5 veranschaulicht ist.

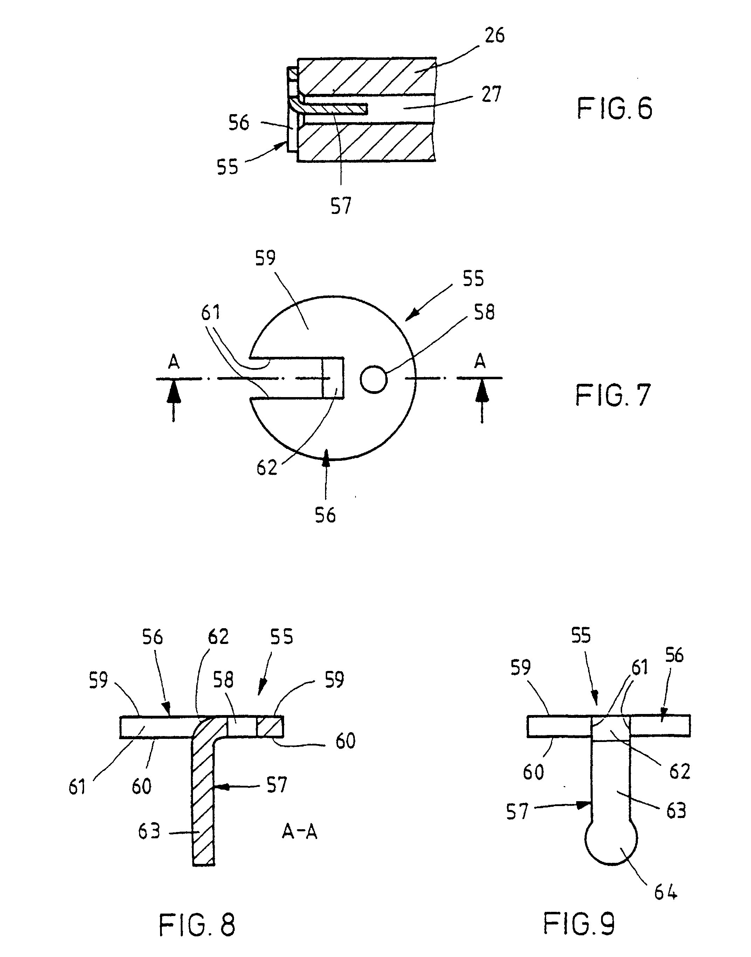

Figur 6 zeigt einen Teilbereich einer weiteren erfindungsgemäßen Betätigungseinrichtung, von der in dieser Ansicht nur ein Abschnitt eines Magnetankers 26 gezeigt ist, der dem Magnetanker 26 aus Figur 1 entspricht. Der Magnetanker 26 weist eine Ausgleichsbohrung 27 auf, in die eine Antiklebescheibe 55 eingesetzt ist. Die Antiklebescheibe 55 weist einen Grundkörper 56 auf, von dem aus sich ein Halteabschnitt 57 in die Ausgleichsbohrung 27 erstreckt.

Die Figuren 7 bis 9 zeigen die Antiklebescheibe 55 aus Figur 6 in näherem Detail.

Wie man am besten in Figur 7 sieht, hat der Grundkörper 56 in der Draufsicht im wesentlichen die Form einer Kreisscheibe. Der Grundkörper 56 ist mit einem Durchgangsloch 58 versehen, das eine auf der Oberseite des Grundkörpers 56 vorgesehene Ventilkörper-Aufstandsfläche 59 mit einer auf der Unterseite des Grundkörpers 56 vorgesehenen Anker-Aufstandsfläche 60 verbindet.

Der Grundkörper 56 weist weiterhin einen sich radial vom Mittelpunkt des Grundkörpers 56 nach außen erstreckenden Schlitz auf, der von Seitenwänden 61 begrenzt wird. Dabei erstreckt sich von den Seitenwänden 61 aus der Halteabschnitt 57 nach unten, wobei zwischen Halteabschnitt 57 und dem Grundkörper 56 eine Biegekante 62 ausgebildet ist.

An die Biegekante 62 schließt sich ein stabförmiger Schaft 63 an, der an seiner Unterseite in eine kreisscheibenförmige Verdickung 64 mündet.

Zur Herstellung der Antiklebescheibe 55 wird zunächst aus einem Blechabschnitt der ebene Grundkörper 56 ausgestanzt. Im Bereich der Seitenwände 61 werden Einschnitte angebracht, die auch die Begrenzungskanten des Schafts 63 ausbilden. An einem zwischen den späteren Seitenwänden 61 über den äußeren Umfang des Grundkörpers 56 abstehenden Blechbereich wird die Verdikkung 64 ausgestanzt.

In einem abschließenden Herstellungsschritt wird der Bereich des Grundkörpers 56 zwischen den Seitenwänden 61 nach unten weggebogen, so daß er den Halteabschnitt 57 ausbildet, wie besonders gut in Figur 8 und Figur 9 zu sehen ist.

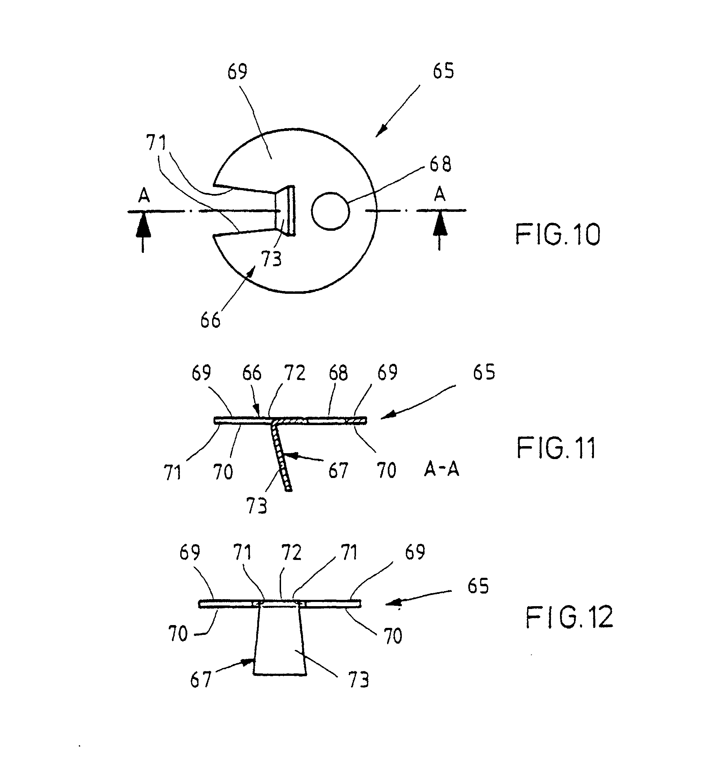

Figur 10, Figur 11 und Figur 12 zeigen eine weitere erfindungsgemäße Antiklebescheibe 65.

Die Figuren 10 bis 12 zeigen die Antiklebescheibe 65 aus Figur 6 in näherem Detail.

Wie man am besten in Figur 10 sieht, hat der Grundkörper 66 in der Draufsicht im wesentlichen die Form einer Kreisscheibe. Der Grundkörper 66 ist mit einem Durchgangsloch 68 versehen, das eine auf der Oberseite des Grundkörpers 66 vorgesehene Ventilkörper-Aufstandsfläche 69 mit einer auf der Unterseite des Grundkörpers 66 vorgesehenen Anker-Aufstandsfläche 70 verbindet.

Der Grundkörper 66 weist weiterhin einen sich radial vom Mittelpunkt des Grundkörpers 66 nach außen erstreckenden Schlitz auf, der von Seitenwänden 71 begrenzt wird. Dabei erstreckt sich von den Seitenwänden 71 aus der Halteabschnitt 67 nach unten, wobei zwischen Halteabschnitt 67 und dem Grundkörper 66 eine Biegekante 72 ausgebildet ist.

An die Biegekante 72 schließt sich ein stabförmiger Schaft 73 an, der sich in einer Richtung zu seiner Unterseite hin schwalbenschwanzförmig verbereitert.

Zur Herstellung der Antiklebescheibe 65 wird zunächst aus einem Blechabschnitt der ebene Grundkörper 66 ausgestanzt. Im Bereich der Seitenwände 61 werden Einschnitte angebracht, die auch die Begrenzungskanten des Schafts 73 ausbilden.

In einem abschließenden Herstellungsschritt wird der Bereich des Grundkörpers 66 zwischen den Seitenwänden 71 nach unten weggebogen, so daß er den Halteabschnitt 67 ausbildet, wie besonders gut in Figur 11 und Figur 12 zu sehen ist.

Bezugszeichenliste
- 1: Magnetventil
- 2: hydraulische Baugruppe
- 3: Baugruppengehäuse
- 4: Magnetventilaufnahmebohrung
- 5: Innengewinde
- 6: Kanal
- 7: Betätigungseinrichtung
- 8: Ventil
- 9: Gehäuse
- 10: Befestigungsabschnitt
- 11: Absatzabschnitt
- 12: Spulenaufnahmeabschnitt
- 13: Betätigungsabschnitt
- 14: Außengewinde
- 15: Anlauffläche
- 16: Dichtring
- 17: Betätigungsfläche
- 18: Spuleneinschuböffnung
- 19: Spulenwicklung
- 20: Spulenträger
- 21: Polscheibe
- 22: Anschlußkontakt
- 23: Spulenumspritzung
- 24: Polschuh
- 26: Magnetanker
- 27: Ausgleichsbohrung
- 28: Antiklebescheibe
- 30: Ventileinschuböffnung
- 31: Ventilgehäuse
- 32: Ventilbohrung
- 33: Ventilkörper
- 34: Anlaufende
- 35: Rückstellfeder

- 36: Ventilkörperausgleichsbohrung
- 37: Querbohrung
- 38: Überströmkanal
- 39: Primärbohrung
- 40: Sekundärbohrung
- 41: Dichtnut
- 42: Dichtring
- 43: Anlaufabsatz
- 44: Anker-Aufstandsfläche
- 45: Ventilkörper-Aufstandsfläche
- 46: Halteabschnitt
- 47: Haltelasche
- 48: Verdickung
- 49: Umbiegekante
- 50: Übergangsabschnitt
- 51: Tragwandung
- 52: Loch
- 53: Zwischenraum
- 54: Aussparung
- 55: Antiklebescheibe
- 56: Grundkörper
- 57: Halteabschnitt
- 58: Durchgangsloch
- 59: Ventilkörper-Aufstandsfläche
- 60: Anker-Aufstandsfläche
- 61: Seitenwand
- 62: Biegekante
- 63: Schaft
- 64: Verdickung
- 65: Antiklebescheibe
- 66: Grundkörper
- 67: Halteabschnitt
- 68: Durchgangsloch
- 69: Ventilkörper- Aufstands fläche
- 70: Anker-Aufstandsfläche
- 71: Seitenwand
- 72: Biegekante
- 73: Schaft

## Patentansprüche

1. Antiklebescheibe (28; 55; 65) für einen Anker (26) einer elektromagnetischen Betätigungseinrichtung, die eine zum Kontakt mit dem Anker (26) bestimmte Anker-Aufstandsfläche (44; 60; 70) sowie eine zum Kontakt mit einem durch den Anker (26) zu betätigenden Bauteil (33) bestimmte Ventilkörper-Aufstandsfläche (45; 59; 69) aufweist, wobei im Bereich der Anker-Aufstandsfläche (44; 60; 70) und/oder im Bereich der Ventilkörper-Aufstandsfläche ein im wesentlichen stabförmiger Halteabschnitt (46; 57; 67) vorgesehen ist.

2. Antiklebescheibe nach Anspruch 1,
**dadurch gekennzeichnet, daß**
sich der Halteabschnitt im wesentlichen senkrecht zu der Anker-Aufstandsfläche (44; 60) bzw. der Ventilkörper-Aufstandsfläche erstreckt.

3. Antiklebescheibe nach Anspruch 1 oder Anspruch 2,
**dadurch gekennzeichnet, daß**
der Halteabschnitt (46; 57; 67) in wenigstens einer Richtung quer zu seiner Haupterstreckungsrichtung eine zunehmende Breite aufweist.

4. Antiklebescheibe nach einem der vorhergehenden Ansprüche,
**dadurch gekennzeichnet, daß**
der Halteabschnitt (46; 57) an seinem von der Anker-Aufstandsfläche (44; 60) bzw. der Ventilkörper-Aufstandsfläche abgewandten Ende eine Verdickung (48; 64) aufweist.

5. Antiklebescheibe nach einem der vorhergehenden Ansprüche,
**dadurch gekennzeichnet, daß**
wenigstens eine Durchgangsöffnung (42, 54; 58; 68) vorgesehen ist, die Anker-Aufstandsfläche (44; 60; 70) und Ventilkörper-Aufstandsfläche (45; 59; 69) miteinander verbindet.

6. Antiklebescheibe nach einem der vorhergehenden Ansprüche,
**dadurch gekennzeichnet, daß**
Anker-Aufstandsfläche (44) und Ventilkörper-Aufstandsfläche (45) eine unterschiedliche Größe aufweisen.

7. Antiklebescheibe nach einem der vorhergehenden Ansprüche,
**dadurch gekennzeichnet, daß**
Halteabschnitt (46; 57; 67), Anker-Aufstandsfläche (44; 60; 70) und/oder Ventilkörper-Aufstandsfläche (45; 59; 69) einstückig ausgebildet sind.

8. Antiklebescheibe nach einem der vorhergehenden Ansprüche,
**dadurch gekennzeichnet, daß**
Halteabschnitt (46; 57; 67), Anker-Aufstandsfläche (44; 60; 70) und/oder Ventilkörper-Aufstandsfläche (45; 59; 69) als Blechbiegeteil ausgebildet sind.

9. Elektromagnetische Betätigungseinrichtung mit einem Anker sowie mit einem durch den Anker (26) zu betätigendem Bauteil (33),
**dadurch gekennzeichnet, daß**
zwischen Anker (26) und dem durch den Anker (26) zu betätigendem Bauteil eine Antiklebescheibe (28) nach einem der Ansprüche 1 bis 8 vorgesehen ist.

10. Verfahren zur Herstellung einer Antiklebescheibe (28; 55; 65) für einen Anker (26) einer elektromagnetischen Betätigungseinrichtung (7), wobei die Antiklebescheibe (28; 55; 65) Merkmale eines der Ansprüche 1 bis 8 aufweisen kann, wobei das Verfahren die folgenden Schritte aufweist:
- Vorsehen eines Blechabschnitts,
- Ausstanzen eines Grundkörpers aus dem Blechabschnitt, wobei am Grundkörper wenigstens ein Halteabschnittsbereich (46; 57; 67) sowie wenigstens ein Aufstandsflächenbereich ausgebildet wird,
- Umbiegen des Halteabschnittsbereichs (46; 57; 67), so daß er vom Aufstandsflächenbereich absteht.

11. Verfahren nach Anspruch 10,
**dadurch gekennzeichnet, daß**
bei der Ausbildung des Grundkörpers zwei Halteabschnittsbereiche (47) vorgesehen werden.

12. Verfahren nach Anspruch 11,
**dadurch gekennzeichnet, daß**
das Umbiegen der Halteabschnittsbereiche (47) so vorgenommen wird, daß diese aufeinander zu liegen kommen.

13. Verfahren nach einem der Ansprüche 10 bis 12,
**dadurch gekennzeichnet, daß**
bei der Ausbildung des Grundkörpers im Halteabschnittsbereich (46; 57; 67) und/oder im Aufstandsflächenbereich wenigstens eine Durchgangsöffnung (52, 54; 58; 68) vorgesehen wird.

14. Verfahren nach einem der Ansprüche 10 bis 13,
**dadurch gekennzeichnet, daß**
wenigstens ein Schritt des Ausbildens des Aufstandsflächenbereichs vorgesehen ist, der so ausgeführt wird, daß wenigstens eine Anker-Aufstandsfläche (44) durch eine Biegekante von wenigstens einer Ventilkörper-Aufstandsfläche (45) ausgebildet wird.

15. Verfahren nach einem der Ansprüche 10 bis 14,
**dadurch gekennzeichnet, daß**
das Umbiegen des Halteabschnittsbereichs bzw. der Halteabschnittsbereiche (46; 57) so vorgenommen wird, daß der bzw. diese im wesentlichen senkrecht vom Aufstandsflächenbereich (44; 60) absteht bzw. abstehen.

## Claims

1. An anti-sticking disc (28; 55; 65) for an armature (26) of an electromagnetic actuating device, which has an armature-contact face (44; 60; 70) intended for contact with the armature (26) and a valve-member-contact face (45; 59; 69) intended for contact with a component (33) to be actuated by the armature (26), wherein a substantially bar-shaped holding portion (46; 57; 67) is provided in the region of the armature-contact face (44; 60; 70) and/or in the region of the valve-member-contact face.

2. An anti-sticking disc according to Claim 1, **characterized in that** the holding portion extends substantially at a right angle to the armature-contact face (44; 60) and the valve-member-contact face respectively.

3. An anti-sticking disc according to Claim 1 or Claim 2, **characterized in that** the holding portion (46; 57; 67) has an increasing width in at least one direction transversely to the direction of its main extension.

4. An anti-sticking disc according to one of the preceding Claims, **characterized in that** the holding portion (46; 57) has a thickening (48; 64) at its end remote from the armature-contact face (44; 60) and the valve-member-contact face respectively.

5. An anti-sticking disc according to one of the preceding Claims, **characterized in that** at least one through-opening (42, 54; 58; 68) is provided which connects the armature-contact face (44; 60; 70) and the valve-member-contact face (45; 59; 69) to each other.

6. An anti-sticking disc according to one of the preceding Claims, **characterized in that** the armature-contact face (44) and the valve-member-contact face (45) are different sizes.

7. An anti-sticking disc according to one of the preceding Claims, **characterized in that** the holding portion (46; 57; 67), the armature-contact face (44; 60; 70) and/or the valve-member-contact face (45; 59; 69) are constructed in one piece.

8. An anti-sticking disc according to one of the preceding Claims, **characterized in that** the holding portion (46; 57; 67), the armature-contact face (44; 60; 70) and/or the valve-member-contact face (45; 59; 69) are constructed in the form of a bent sheet-metal part.

9. An electromagnetic actuating device with an armature and with a component (33) to be actuated by the armature (26), **characterized in that** an anti-sticking disc (28) according to one of Claims 1 to 8 is provided between the armature (26) and the component to be actuated by the armature (26).

10. A method of producing an anti-sticking disc (28; 55; 65) for an armature (26) of an electromagnetic actuating device (7), wherein the anti-sticking disc (28; 55; 65) can have features of one of Claims 1 to 8, wherein the method comprises the following steps:
- providing a sheet-metal portion,
- stamping out a main body from the sheet-metal portion, wherein at least one holding-portion region (46; 57; 67) and at least one contact-face region are formed on the main body,
- bending over the holding-portion region (46; 57; 67) so that it projects from the contact-face region.

11. A method according to Claim 10, **characterized in that** two holding-portion regions (47) are provided during the formation of the main body.

12. A method according to Claim 11, **characterized in that** the bending over of the holding-portion regions (47) is carried out in such a way that they come to rest one upon the other.

13. A method according to one of Claims 10 to 12, **characterized in that** at least one through-opening (52, 54; 58; 68) is provided in the holding-portion region (46; 57; 67) and/or in the contact-face region during the formation of the main body.

14. A method according to one of Claims 10 to 13, **characterized in that** at least one step of the formation of the contact-face region is provided, which is performed in such a way that at least one armature-contact face (44) is formed by a bending edge of at least one valve-member-contact face (45).

15. A method according to one of Claims 10 to 14, **characterized in that** the bending over of the holding-portion region or the holding-portion regions (46; 57) is carried out in such a way that it projects or they project from the contact-face region (44; 60) substantially at a right angle.

## Revendications

1. Disque anticollage (28;55;65) pour une armature d'un dispositif d'actionnement électromagnétique, qui comporte une surface d'appui d'armature (44;60;70), destinée à venir en contact avec l'armature (26), ainsi qu'une surface d'appui (45;59;69) d'un corps de soupape, destinée à venir en contact avec un composant (33) devant être actionné par l'armature (26), une section de retenue essentiellement en forme de barreau (46;59;67) étant prévue dans la zone de la surface d'appui (44;60;70) de l'armature et/ou dans la zone de la surface d'appui du corps de soupape.

2. Disque anticollage selon la revendication 1, **caractérisé en ce que** la section de retenue s'étend essentiellement perpendiculairement à la surface d'appui (44;60) de l'armature ou à la surface d'appui du corps de soupape.

3. Dispositif anticollage selon la revendication 1 ou la revendication 2, **caractérisé en ce que** la section de retenue (46;57;67) possède une largeur qui augmente, au moins dans une direction transversale par rapport à sa direction d'étendue principale.

4. Dispositif anticollage selon l'une des revendications précédentes, **caractérisé en ce que** la section de retenue (46;57) comporte un épaississement (48;64) sur son extrémité tournée à l'opposé de la surface d'appui (44;60) de l'armature ou de la surface d'appui du corps de soupape.

5. Disque anticollage selon l'une des revendications précédentes, **caractérisé en ce qu'**il est prévu au moins une ouverture de passage (42,54;58;68), qui relie entre elles la surface d'appui (44;60;70) de l'armature et la surface d'appui (45;59;69) du corps de soupape.

6. Disque anticollage selon l'une des revendications précédentes, **caractérisé en ce que** la surface d'appui (44) de l'armature et la surface d'appui (45) du corps de soupape possèdent des tailles différentes.

7. Disque anticollage selon l'une des revendications précédentes, **caractérisé en ce que** la section de retenue (46;57;67), la surface d'appui (44;60;70) de l'armature et/ou la surface d'appui (45;59;69) du corps de soupape sont agencées d'un seul tenant.

8. Disque anticollage selon l'une des revendications précédentes, **caractérisé en ce que** la section de retenue (46;57;67), la surface d'appui (44;60;70) de l'armature et/ou la surface d'appui (45;59;69) du corps de soupape sont agencées sous la forme d'une pièce en tôle coudée.

9. Dispositif d'actionnement électromagnétique comportant une armature ainsi qu'un composant (33) devant être actionné par l'armature (26), **caractérisé en ce qu'**il est prévu entre l'armature (26) et le composant devant être actionné par l'armature (26), un disque anticollage (28) selon l'une des revendications 1 à 8.

10. Procédé pour fabriquer un disque anticollage (28;55;65) pour une armature (26) d'un dispositif d'actionnement électromagnétique (7), le disque anticollage (28;55;65) possédant des caractéristiques de l'une des revendications 1 à 8, le procédé comprenant les étapes suivantes consistant à :
- prévoir un morceau de tôle;
- découper un corps de base dans le morceau de tôle, avec au moins une zone de section de retenue (46;57;67) ainsi qu'au moins une zone de surface d'appui prévues sur le corps de base,
- plier la partie de section de retenue (46,57;67) de manière qu'elle fasse saillie à partir de la zone de surface d'appui.

11. Procédé selon la revendication 10, **caractérisé en ce que** lorsque lors de la réalisation du corps de base, on prévoit deux parties de section de retenue (47).

12. Procédé selon la revendication 11, **caractérisé en ce que** le pliage des parties de section de retenue (47) est réalisé de telle sorte que ces parties viennent s'appliquer l'une sur l'autre.

13. Procédé selon l'une des revendications 10 à 12, **caractérisé en ce que** lors de la réalisation du corps de base, on prévoit au moins une ouverture de passage (52,54;58;68) dans la partie de section de retenue (46,57;67) et/ou dans la partie de surface d'appui.

14. Procédé selon l'une des revendications 10 à 13, **caractérisé en ce qu'**il est prévu au moins une étape de réalisation de la région de surface d'appui, qui est agencée de telle sorte qu'au moins une surface d'appui (44) de l'armature est formée par un bord de pliage d'au moins une surface d'appui (45) d'un corps de soupape.

15. Procédé selon l'une des revendications 10 à 14, **caractérisé en ce que** le pliage de la partie de section de retenue ou des parties de section de retenue (46;57) est réalisé de telle sorte que la ou les régions de section de retenue font saillie essentiellement perpendiculairement à la partie de surface d'appui (44;60).
